# EUROPEAN PATENT SPECIFICATION

(11) **EP 2 017 505 B1**
(45) Date of publication and mention of the grant of the patent: **24.10.2012**
(21) Application number: 08160384.7
(22) Date of filing: 15.07.2008
(51) Int. Cl.: F16H 63/42

(54) **System for suggesting a change of gear for a motor vehicle provided with an engine and a gear change with discrete ratios**
System zum Vorschlagen einer Gangänderung für ein Motorfahrzeug mit einem Motor und einer Gangschaltung mit diskreten Verhältnissen
Système de suggestion d'un changement de vitesses pour un véhicule à moteur fourni avec un moteur et boîte de vitesses avec des rapports discrets

(30) Priority: 17.07.2007 IT TO20070527
(43) Date of publication of application: 21.01.2009
(73) Proprietor: Fiat Group Automobiles S.p.A., 10135 Torino (TO) (IT)
(72) Inventor: Riegel, Alessandro, I-10135 Torino (IT); Sepe, Eduardo, I-10135 Torino (IT); De Cristofaro, Fernando, I-10135 Torino (IT)
(74) Representative: Quinterno, Giuseppe

(56) References cited:
- EP-A1- 0 600 400
- FR-A1- 2 516 650
- US-A- 4 411 174
- US-A- 4 622 637

## Description

This invention relates to a system for suggesting a gear change for a motor vehicle provided with an engine associated with a gear change having discrete ratios, of the kind defined in the preamble of claim 1.

A system of that kind, disclosed in US-4 411174 A, is based on using the air-intake throttle opening angle as the control paramett. This document represents the closest prior art.

One object of this invention is to provide an improved system of the initially defined kind.

This and other objects will be accomplished according to the invention through a system having the features defined in claim 1.

Other advantages and characteristics of the present invention will become clear from the following detailed description which is given with reference to the appended drawings which are provided purely by way of non-limiting example and in which:
Figure 1 is a diagrammatical representation of a system according to this invention,
Figure 2 is a diagram which illustrates threshold values of the engine torque used in the system according to the invention within the engine consumption/torque space, and
Figure 3 is a diagram illustrating the characteristics of the checking interface for the system according to the invention.

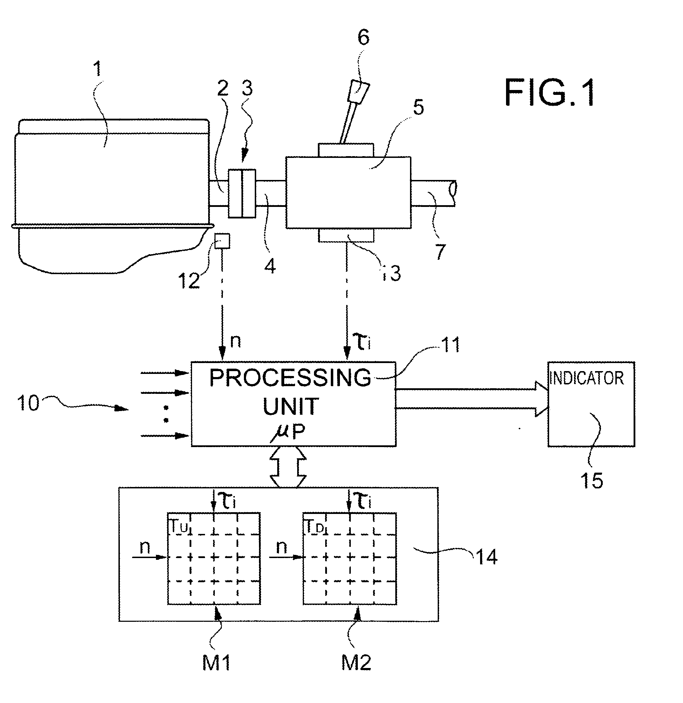

In Figure 1, 1 indicates a motor vehicle engine, for example, an internal combustion engine. Purely by way of a non-restrictive example, engine 1 may be an Otto cycle engine, with four cylinders in line, and two valves per cylinder.

Engine 1 has a shaft 2 which through a clutch 3 can be connected to an input shaft 4 of a gear change unit indicated as a whole by 5.

Gear change unit 5 is a gear change capable of providing a plurality of discrete transmission ratios or gears. This may be of the type which can be controlled manually, for example by means of a lever 6. As an alternative gear change 5 may be of the automatic or "robot" type.

The output shaft from gear change 5 is indicated by 7.

A system for suggesting a change of gear according to this invention, indicated as a whole by 10 in Figure 1, is associated with the unit comprising engine 1 and gear change 5.

In the embodiment illustrated system 10 comprises a processor unit 11, which includes for example a microprocessor.

Information or data from a sensor 12 which detects the rotation speed n (number of rotations per unit time) of engine 1 reach processing unit 11 when in operation. Conveniently sensor 12 is not a specific sensor for implementing the system according to the invention, but may be a sensor which is also used for other purposes, for example for managing operation of internal combustion engine 1 or one of its functions.

Further signals or data from an estimator or detector device 13 associated with gear change 5 reach processing unit 11 when in operation. This estimator or detector 13 in particular provides signals or data indicating the transmission ratio τᵢ currently engaged by gear change 5. In the case of an estimator the transmission ratio currently in use may be determined from the rotation speed of engine 1 and from the rotation speed of a wheel.

As will be more apparent below, system 10 according to the invention needs for its own operations to know the value of the torque T delivered by engine 1. In this system indicated diagrammatically in Figure 1 no suitable device for detecting torque T delivered by engine 1 is necessarily provided; this torque may be communicated to processor unit 11, or be calculated from that, in a manner which is in itself known, on the basis of parameters detected in the engine.

In what follows it will therefore be assumed that processing unit 11 receives operating information relating to the torque T instantaneously provided by engine 1.

Memory devices 14, whose contents will be better described below, are associated with processing unit 11.

Among the objects of the system according to the invention is that of acting so that following application of the gear change suggested by the system the same torque as was applied immediately before the gear change is applied to the driving wheels. This in fact means that the acceleration and velocity of the wheels is not varied. This condition is equivalent to requiring that the power delivered by the engine is substantially the same before and after the suggested gear change. In the plane of engine rotation speed /delivered engine torque this is equivalent to moving to a different point on the plane lying on the same constant power hyperbole as the preceding working point as a result of the suggested gear change.

Another objective according to the invention is to reduce the fuel consumption arising from the suggested change by an appreciable amount.

As has already been mentioned, the system according to the invention is also designed to provide a system in which the calibration procedure does not require specific inputs in relation to the type of vehicle for which the system is intended.

Finally, the system according to the invention must operate without causing the engine to operate at rotation speeds which are too high or too low.

Given the above, when during operation, gear change 5 is engaged in a particular ratio τ_{¡} and engine 1 is running at a rotation speed n, minimisation of fuel consumption for the same torque and speed of the driving wheels results in the identification of three regions or fields for values for the torque T delivered by the engine corresponding to three conditions or states of the system suggesting the change of gear:
* the condition of suggesting change to the immediately higher transmission ratio ("Upshift"),
* the condition of "no suggestion" ("Mute"), and
* the condition of suggesting change to the immediately lower transmission ratio ("Downshift").

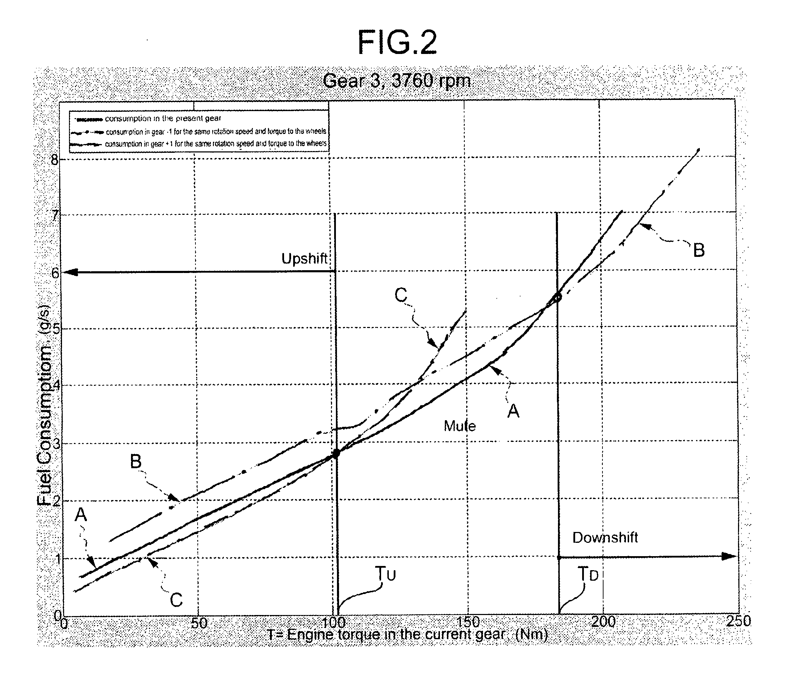

The diagram in Figure 2 refers to a specific operating condition of the unit comprising engine 1 and gear change 5. As indicated at the top above the diagram in Figure 2, this diagram refers to an operating condition in which gear change 5 is engaged in third gear (gear = 3) and shaft 2 of engine 1 rotates at 3760 rpm. In the diagram in Figure 2 the value of the torque T delivered by engine 1, expressed in nM, while gear change 5 is in third gear is shown as the abscissa; fuel consumption, expressed as g/s, is shown as the ordinate in that diagram.

Three curves, indicated by A, B and C respectively, are shown in the diagram:
- curve A, shown as a solid line, illustrates the consumption of engine 1 while gear change 5 is in the present or current gear (third gear),
- curve B indicates the corresponding change in fuel consumption which would occur if gear change 5 were to be engaged in the immediately lower transmission ratio or gear (second gear), and
- curve C indicates the fuel consumption which would occur if gear change 5 were to be engaged in the immediately higher transmission ratio or gear (fourth gear).

Two threshold values of the engine torque T, indicated by T_{U} and T_{D} respectively, are shown in the diagram in Figure 2.

For values of torque T less than T_{U} the fuel consumption when gear change 5 is engaged in the immediately higher ratio (fourth gear) is lower than the consumption which would occur in the present gear (third gear). Therefore as soon as torque T falls below T_{U} it is desirable that a gear change from the present gear to the immediately higher gear should be suggested.

When torque T delivered by engine 1 is above threshold T_{D}, fuel consumption would be less if gear change 5 were to be engaged in the immediately lower transmission ratio or gear (second gear). In this case it is desirable that a change of gear to the immediately lower transmission ratio should be suggested.

In view of what has been described hitherto, with the system according to the invention at least two tables or maps are sufficient to calculate the "recommended" transmission ratio or gear or to suggest it to the driver. As will be seen, these maps depend on the transmission ratio currently engaged by gear change 5, and the current rotation speed of engine 1.

These tables or maps are stored in memory devices 14 associated with processor unit 1, as shown symbolically in Figure 1, where these tables or maps are indicated by M1 and M2 respectively.

Tables or maps M1 and M2 are provided on the basis of the results of test bench tests on engine 1 and (known) values of the transmission ratios (τᵢ) of associated gear change 5.

In relation to the transmission ratio τᵢ currently engaged by gear change 5 and the current rotation speed n of engine 1 table or map M1 provides a corresponding threshold value T_{U} for the torque delivered by engine 1 below which processing unit 11 must indicate that it is desirable to change to the immediately higher transmission ratio τᵢ₊₁.

Similarly, depending upon the transmission ratio τᵢ currently engaged by gear change 5 and the instantaneous rotation speed N of motor 1 table or map M2 provides a corresponding threshold value T_{D} for the torque delivered by engine 1 above which processing unit 11 should indicate that it is desirable to change to the immediately lower transmission ratio τ_{i-1.}

When in operation processing unit 11 therefore compares the instantaneous torque provided by the engine with the threshold values obtained from tables or maps M1 and M2 and - if appropriate - brings about activation of an indicator device 15 to suggest to the driver that it is desirable to change to the immediately higher or lower transmission ratio or gear.

Indicator device 15 is of any type capable of providing the driver with a perceptible indication, for example of the optical or acoustic type.

In the case of an automatic or "robot" gear change, a generator of gear change signals for the electronic unit controlling the gear change may be provided instead of a generator 15 of signals which can be perceived by the driver.

Maps M1 and M2 may for example be generated using an automatic calibration tool from experimental data obtained on the specific engine.

The inventors have developed an automatic calibration tool and a checking interface in the MathLab environment.

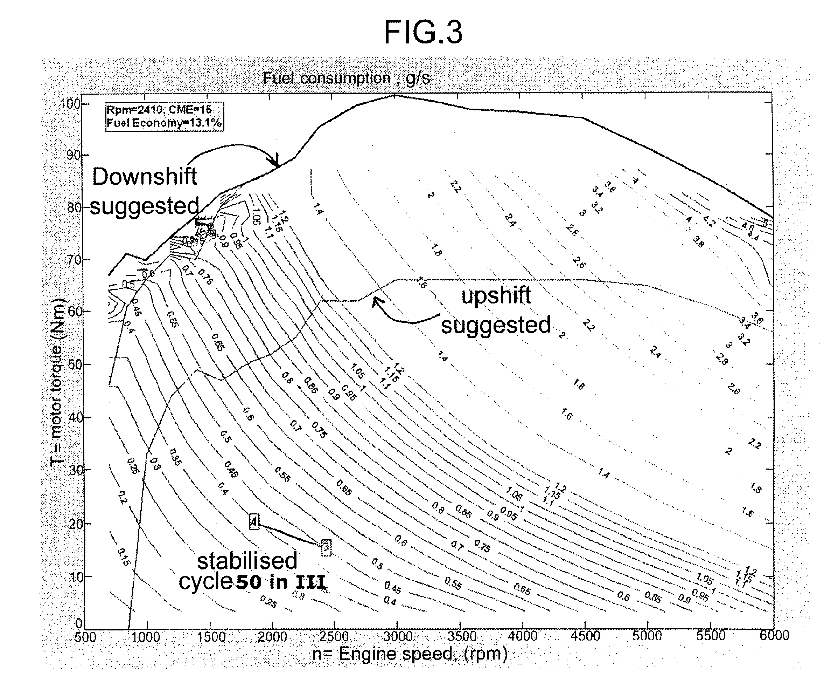

In the checking interface, to which the illustrative diagram in Figure 3 relates, it is possible, after having specified the starting transmission ratio or gear, to move a cursor in the engine rotation speed/delivered engine torque plane in which the isoconsumption curves are drawn, by using a mouse, as may be seen in the diagram in Figure 3. The checking interface developed shows the starting gear τᵢ (third gear in the example of the graphic in Figure 3), the destination gear τ_{¡+1} (fourth gear in the example in Figure 3), and the trajectory between them, in that plane. The interface also indicates the corresponding fuel saving being made.

As may be seen from a diagram in Figure 3, the interface also shows the threshold lines for suggesting change to the immediately higher transmission ratio and change to the immediately lower transmission ratio.

Of course, without altering the principle of the invention, the manner and details of implementation may be varied extensively from what has been described and illustrated purely by way of a non-restrictive example without thereby going beyond the scope of the invention as defined in the appended claims.

In particular it will be noted that the distinction between the first and second table or map is essentially of indicative value, in that maps M1 and M2 described above may simply represent parts of a table or map unit.

As an alternative, the tables or maps used may also be more than two in number - a further map may be provided to obtain functioning of the "sports" type.

## Claims

1. A system (10) for suggesting a change of gear in a motor vehicle provided with an engine (1) associated with a gear change (5) capable of providing a plurality of discrete transmission ratios (τᵢ); the system (10) comprising
first and second detector means (12, 13) capable of providing electrical signals indicating the transmission ratio (τᵢ) or gear engaged by the gear change (5) and the engine (1) rotation speed (n) respectively,
indicator means for an engine parameter (T),
memory means (14) in which a first and second table or map (M1, M2) respectively are stored and provide corresponding threshold values (T_{U}; T_{D}) for said engine parameter (T) below which and above which respectively the desirability of changing to the immediately higher transmission ratio (τᵢ₊₁) or the immediately lower transmission ratio (τᵢ₋₁) respectively in relation to the transmission ratio (τᵢ) currently engaged by the gear change (5) and the rotation speed (n) of the engine (1) is indicated, and
processing means (11) operatively connected to the said detection means (12, 13), indicator means and memory means (14) and designed to activate signal generator means (15) to indicate the desirability of changing to the higher gear (τᵢ₊₁) ratio and lower gear (τᵢ₋₁) ratio respectively when said engine parameter (T) is less than the threshold value (T_{U}) provided by the first table or map (M1) and when said engine parameter (T) is higher than the threshold value (T_{D}) provided by the second table or map (M2) respectively;
the system (10) being **characterized in that** said engine parameter (T) is the torque (T) delivered by the engine (1).

2. A system according to claim 1, in which for each transmission ratio (τᵢ) of gear change (5) and for each value of the rotation speed (n) of the engine (1) the threshold value (T_{U}) of the first table or map (M1) is less than the threshold value (T_{D}) of the second table or map (M2).

3. A system according to claim 2, in which the threshold values (T_{U}; T_{D}) for the said first and second table or map (M1; M2) are obtained on the basis of the results of test bed tests on the engine (1) and the values of the transmission ratios (τᵢ) of the gear change (5).

4. A system according to claim 3, in which the said threshold values (T_{U}; T_{D}) are also determined on the basis of the mechanical efficiency of the gear change (5) in the individual ratios.

## Patentansprüche

1. System (10) zum Vorschlagen eines Gangwechsels in einem Kraftfahrzeug, das mit einem Motor (1) versehen ist, der mit einer Gangschaltung (5) verbunden ist, die eine Vielzahl separater Übersetzungsverhältnisse (τᵢ) herstellen kann, wobei das System (10) umfasst:
eine erste und eine zweite Erfassungseinrichtung (12, 13), die in der Lage sind, elektrische Signale bereitzustellen, die das Übersetzungsverhältnis (τᵢ) oder den durch die Gangschaltung (5) eingelegten Gang bzw. die Drehzahl (n) des Motors (1) anzeigen,
eine Anzeigeeinrichtung für einen Motor-Parameter (T),
eine Speichereinrichtung (14), in der jeweils eine erste sowie eine zweite Tabelle oder ein erstes sowie ein zweites Kennfeld (M1, M2) gespeichert sind, die entsprechende Schwellenwerte (T_{U}; T_{D}) für den Motor-Parameter (T) bereitstellen, unter bzw. über denen angezeigt wird, dass es wünschenswert ist, zu dem unmittelbar höheren Übersetzungsverhältnis (τᵢ₊₁) bzw. dem unmittelbar niedrigeren Übersetzungsverhältnis (τᵢ₋₁) in Bezug auf das Übersetzungsverhältnis (τᵢ) zu wechseln, in dem sich die Gangschaltung (5) und die Drehzahl (n) des Motors (1) aktuell befinden, und
eine Verarbeitungseinrichtung (11), die funktional mit den Erfassungseinrichtungen (12, 13), der Anzeigeeinrichtung und der Speichereinrichtung (14) verbunden ist und dazu dient, eine Signalerzeugungseinrichtung (15) zu aktivieren, um anzuzeigen, dass es wünschenswert ist, zu dem höheren Übersetzungsverhältnis (τᵢ₊₁) oder dem niedrigeren Übersetzungsverhältnis (τᵢ₋₁) zu wechseln, wenn der Motor-Parameter (T) unter dem durch die erste Tabelle oder das erste Kennfeld (M1) bereitgestellten Schwellenwert (T_{U}) liegt, bzw.
wenn der Motor-Parameter (T) über dem durch die zweite Tabelle oder das zweite Kennfeld (M2) bereitgestellten Schwellenwert (T_{D}) liegt;
wobei das System (10) **dadurch gekennzeichnet ist, dass** der Motor-Parameter (T) das von dem Motor (1) gelieferte Drehmoment (T) ist.

2. System nach Anspruch 1, wobei für jedes Übersetzungsverhältnis (τᵢ) der Gangschaltung (5) und für jeden Wert der Drehzahl (n) des Motors (1) der Schwellenwert (T_{U}) der ersten Tabelle oder des ersten Kennfeldes (M1) unter dem Schwellenwert (T_{D}) der zweiten Tabelle oder des zweiten Kennfeldes (M2) liegt.

3. System nach Anspruch 2, wobei die Schwellenwerte (T_{U}; T_{D}) für die erste und die zweite Tabelle oder das erste oder zweite Kennfeld (M1; M2) auf Basis der Ergebnisse von Versuchsstand-Tests des Motors (1) und der Werte der Übersetzungsverhältnisse (τᵢ) der Gangschaltung (5) ermittelt werden.

4. System nach Anspruch 3, wobei die Schwellenwerte (T_{U}; T_{D}) auch auf Basis des mechanischen Wirkungsgrades der Gangschaltung (5) in den einzelnen Verhältnissen bestimmt werden.

## Revendications

1. Système (10) apte à suggérer un changement de vitesse dans un véhicule à moteur pourvu d'un moteur (1) associé à un changement de vitesse (5) capable de fournir une pluralité de rapports distincts de transmission (τᵢ), le système (10) comprenant :
des premier et second moyens détecteurs (12, 13) capables de fournir des signaux électriques indiquant respectivement le rapport de transmission (τᵢ) ou la vitesse enclenchée par le changement de vitesse (5) et la vitesse de rotation (n) du moteur (1) ;
un moyen indicateur pour un paramètre de moteur (T) ;
un moyen de mémorisation (14) dans lequel sont mémorisées respectivement une première et une seconde table ou carte (M1, M2) et qui fournissent des valeurs de seuil correspondantes (T_{U}; T_{D}) pour ledit paramètre de moteur (T) au-dessous desquelles et au-dessus desquelles il est respectivement indiqué qu'il est opportun de changer pour le rapport de transmission immédiatement supérieur (τᵢ₊₁j) ou pour le rapport de transmission immédiatement inférieur (τᵢ₋₁) en relation avec le rapport de transmission (τᵢ) actuellement enclenché par le changement de vitesse (5) et avec la vitesse de rotation (n) du moteur (1) ; et
un moyen de traitement (11) fonctionnellement raccordé auxdits moyens de détection (12, 13), audit moyen indicateur et audit moyen de mémorisation (14) et conçu pour activer un moyen générateur de signal (15) pour indiquer l'opportunité de changer respectivement pour le rapport de vitesse supérieur (τᵢ₊₁) et pour le rapport de vitesse inférieur (τᵢ₋₁) lorsque ledit paramètre de moteur (T) est inférieur à la valeur de seuil (T_{U}) fournie par la première table ou carte (M1) et lorsque ledit paramètre de moteur (T) est supérieur à la valeur de seuil (T_{D}) fournie par la seconde table ou carte (M2), respectivement,
le système (10) étant **caractérisé en ce que** ledit paramètre de moteur (T) est le couple (T) délivré par le moteur (1).

2. Système selon la revendication 1, dans lequel pour chaque rapport de transmission (τᵢ) du changement de vitesse (5) et pour chaque valeur de la vitesse de rotation (n) du moteur (1) la valeur de seuil (T_{U}) de la première table ou carte (M1) est inférieure à la valeur de seuil (T_{D}) de la seconde table ou carte (M2).

3. Système selon la revendication 2, dans lequel les valeurs de seuil (T_{U}; T_{D}) pour ladite première et ladite seconde table ou carte (M1 ; M2) sont obtenues sur la base de résultats d'essais au banc d'essais sur le moteur (1) et des valeurs des rapports de transmission (τᵢ) du changement de vitesse (5).

4. Système selon la revendication 3, dans lequel lesdites valeurs de seuil (T_{U}; T_{D}) sont aussi déterminées sur la base du rendement mécanique du changement de vitesse (5) dans les rapports individuels.
